# EUROPEAN PATENT APPLICATION

(11) **EP 2 913 757 A1**
(43) Date of publication of application: **02.09.2015**
(21) Application number: 14156747.9
(22) Date of filing: 26.02.2014
(51) Int. Cl.: G06F 11/36

(54) **Method, system, and computer software product for test automation**

(71) Applicant: FMC Feindt Management Consulting GmbH, 8343 Rotkreuz (CH)
(72) Inventor: Dorsch, Sebastian, 22337 Hamburg (DE); Huhn, Heiko, 65760 Eschborn (DE)
(74) Representative: Meyer zu Bexten, Elmar

(57) **Abstract**

**Problem**

The invention aims to provide an improved approach to software test automation.

**Solution**

A method of automating a software test, comprising the steps of:
editing a test case by means of a test case editor (16);
storing the test case in a test case repository (26);
generating test data based on a temporal precondition of the test case;
loading the test data by means of a test data loader (36, 46, 48);
determining a test result of the test case based on the test data; and
providing a test log to a subscriber based on the test result.

## Description

### Technical Field

The present invention relates to software test automation.

### Background Art

A key step in the process of software engineering is testing the software for correct behavior prior to its release to end users.

For small-scale engineering efforts including prototypes, exploratory testing may be sufficient. With such informal approach, the tester does not follow any formalized testing procedure, but rather explores the user interface of the application using as many of its features as possible, using information gained in prior tests to intuitively derive additional tests. Since a lack of knowledge will lead to incompleteness in testing, the success of exploratory manual testing relies heavily on the domain expertise of the tester.

To maximize the number of defects that can be found, large scale engineering projects typically involve a more rigorous methodology. Such systematic approach focuses on predetermined test cases and generally involves the following steps:
1. Choose a high level test plan where a general methodology is chosen, and resources such as people, computers, and software licenses are identified and acquired.
2. Write detailed test cases, identifying clear and concise steps to be taken by the tester, with expected outcomes.
3. Assign the test cases to testers, who manually follow the steps and record the results.
4. Author a test report, detailing the findings of the testers. The report is used by managers to determine whether the software can be released, and if not, it is used by engineers to identify and correct the problems.

Some of the aforementioned software testing tasks, such as extensive low-level interface regression testing, can be laborious and time consuming to do manually. In addition, a manual approach may not always be effective in finding certain classes of defects. Test automation offers an advanced approach to performing these types of tests. Once automated tests have been developed, they can be run quickly and repeatedly. In particular, test automation can be a cost-effective method for regression testing of applications such as enterprise resource planning (ERP) that have a long maintenance life. In this case, even minor modifications over the lifetime of an application can cause disastrous failure if scope or quality of testing are neglected.

The following definitions are used throughout this document:
- software testing: an investigation conducted to provide stakeholders with information about the quality of the software product or service under test
- test automation: the use of special software (separate from the software being tested) to control the execution of tests and the comparison of actual outcomes with predicted outcomes
- test case: a set of conditions or variables under which a tester or software will determine whether an application, software system, or one of its features is working as was originally established
- precondition: a condition or predicate that must always be true just prior to the execution of some section of code or before an operation in a formal specification

### Summary of invention

It is an object of the invention to provide an improved approach to test automation.

### Technical Problem

SAP Business Suite is a bundle of business applications by SAP AG that provide integration of information and processes, collaboration, industry-specific functionality, and scalability. This software bundle is based on SAP's proprietary technology platform called NetWeaver and designed to be executed on a variety of hardware platforms.

In spite of the broad functionality offered by SAP Business Suite and competitive products, any deviating business processes may require technical customization of the standard and additional coding on top of the base product to meet a client's demands. Such adaptation in most cases necessitates extensive component integration testing (CIT), usually performed by the developers themselves, system integration testing (SIT), and user acceptance testing (UAT) before it is ultimately deployed.

As with any complex enterprise software, it lies in the nature of SAP Business Suite that such tests impose various requirements on the underlying system. Specifically, for the CIT to yield meaningful results, the test system database needs to be populated with authentic data. These preconditions form an impediment to any systematic and perpetual test strategy.

Furthermore, the subsequent SIT and, optionally, UAT strongly depend on the quality of their respective test cases. These test cases, typically based purely on business requirements, cannot be expected to cover each and every flaw inherent specifically in the particular implementation chosen. The same holds true for manual regression testing, which is hardly performed for each minor change.

The aforementioned circumstances may cause the quality and scope of testing to fall short of their required baseline, leading to technical failures of the resulting software.

### Solution to Problem

The present invention is a method of automating a software test. The method includes the steps of: editing a test case by means of a test case editor; storing the test case in a test case repository; generating test data based on a historical precondition of the test case; loading the test data by means of a test data loader; determining a test result of the test case based on the test data; and providing a test log to a subscriber based on the test result.

A system for carrying out the method includes: means for editing a test case using a test case editor; means for storing the test case in a test case repository; means for generating test data based on a historical precondition of the test case; means for loading the test data by means of a test data loader; means for determining a test result of the test case based on the test data; and means for providing a test log to a subscriber based on the test result.

A corresponding computer software product includes a medium readable by a processor, the medium having stored thereon a set of instructions for automating the software test, comprising: a first sequence of instruction which, when executed by the processor, causes said processor to modify a test case by means of a test case editor; a second sequence of instruction which, when executed by the processor, causes said processor to store the test case in a test case repository; a third sequence of instruction which, when executed by the processor, causes said processor to generate test data based on a historical precondition of the test case; a fourth sequence of instruction which, when executed by the processor, causes said processor to load test data by means of a test data loader; a fifth sequence of instruction which, when executed by the processor, causes said processor to determine a test result of the test case based on the test data; and a sixth sequence of instruction which, when executed by the processor, causes said processor to provide a test log to a subscriber based on the test result.

### Advantageous effect of invention

The invention is characterized in the way that test data is generated prior to its loading by the test data loader. This feature reflects the temporal constraints inherent to many business processes that SAP Business Suite aims to integrate. A conventional approach to test automation may include a generation of customer and other master data based on standard processes to populate the test database with meaningful records. Meanwhile, it does not offer any viable solution to the technical issues posed by a test case's historical or temporal dependency.

Specifically, a formal test case encompasses a known input and associated output to be expected, both of which are predetermined by the test case author before the test case is executed. The known input is designed to test a precondition while the expected output serves to test the envisaged post-condition.

As an example, a test case designed for a core banking application may be used to assert the maturity of a fixed-term deposit with the respective financial institute. Such test case encompasses the obvious post-condition of the repayment falling due. However, the preconditions involved are manifold. Not only does there need to exist a related customer account eligible for the disbursement as well as a valid contract in favour of the account holder, including the pertinent terms of repayment. Furthermore, maturity of the deposit will require the account to exist for a prolonged period of time, such as several years.

Known approaches to this problem involve a manipulation of the system date or cumbersome modification of individual records prior to executing the test case. Needless to say, both (and other) approaches are prone to numerous technical errors and unwanted side effects, thus compromising the overall test quality.

In contrast, by generating historical test data, a method according to the present invention effectively simulates the occurrence of the required event just at the time of execution (or purposefully simulates its non-occurrence in case of a negative test). To this end, a proposed test case editor and corresponding repository allow for a creation of test data reflecting the envisaged temporal dependencies, ready to be loaded into the dedicated test database by way of migration. The invention thus provides a unique methodology combined with a complete set of tools allowing to both improve the quality and expand the scope of testing customization and code for the SAP Business Suite platform. Specifically, the resulting approach may be advantageously employed in the context of core banking, loans management, and other applications for use in the financial services industry, where absolute reliability is sine qua non to the deployment of any modification. Furthermore, the inventive approach may help reduce the technical effort imposed by the various test phases by a total of up to 80 %.

### Brief description of drawings

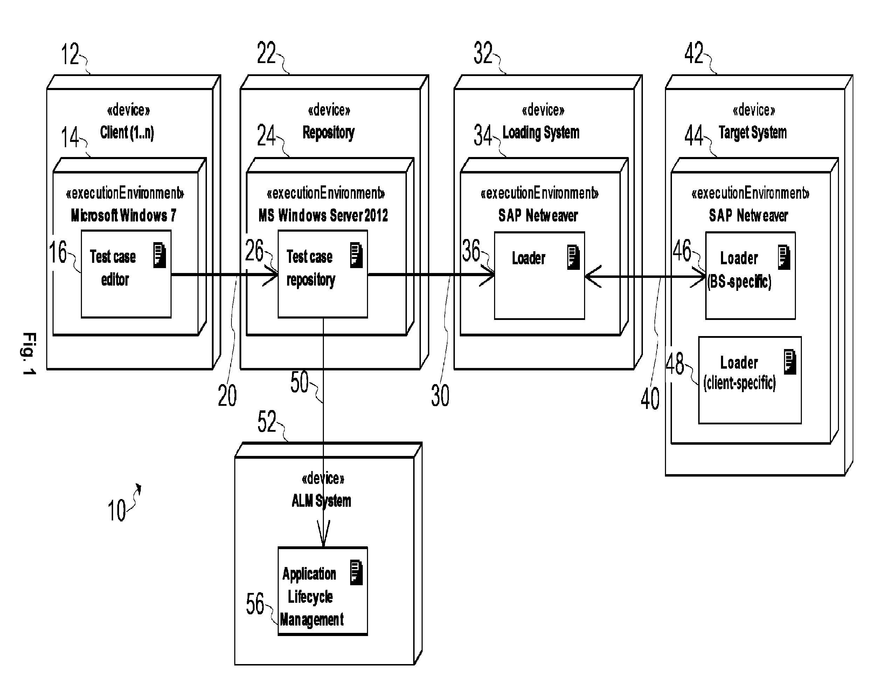

A method, system landscape, and computer software application according to an embodiment of the invention may be elucidated by reference to the sole Figure 1.

### Description of embodiments

In an exemplary embodiment, a method of automating a software test is carried out by means of a computer software product 16, 26, 36, 46, 48 in the form of an integrated test automation workbench. The computer software product 16, 26, 36, 46, 48 involves several sequences of instructions that are distributed across a landscape of multiple application and associated database servers 12, 22, 32, 42. Figure 1 illustrates the resulting deployment model in its entirety, expressed using the Unified Modeling Language (UML).

As depicted in Figure 1, the computer software product 16, 26, 36, 46, 48 is composed of a number of distinct software artifacts, each of which essentially constitutes one of the aforementioned sequences of instructions. One of these artifacts is formed by a test case editor 16 executed in a first execution environment 14 based on a client operating system, such as the one provided by Microsoft Corporation under the trade name of Windows 7. In accordance with the well-established client-server model of computing, the hardware device hosting this execution environment is hereinafter referred to as a client 12.

Base functionality provided by the test case editor 16 to testing personnel includes, inter alia, the creation and augmentation of test cases, as well as the import of regression test cases from previous software releases.

Typically, the deployment comprises a multitude of such clients 12, each of them connected to a common test case repository 26 via a first communication path 20. In the embodiment at hand, the first communication path 20 is based on a web service architecture combined with a traditional file interface such as a shared directory. The test case repository 26, which allows for the execution of test cases in arbitrary cycles, may be executed in a second execution environment 24 based on a server operating system such as Microsoft Windows Server 2012. In conformance with the corresponding software artifact, the hosting device is referred to as a repository 22 in this context.

While the test case repository 26 receives web service requests and files from its associated clients 12 via the first communication path 20, it also serves as a controller and data source to a downstream software artifact hereinafter referred to as a first loader 36. As opposed to the test case editor 16 and test case repository 26, the first loader 36 is executed by a third execution environment 34 based on the Netweaver computing platform, which also forms the technical foundation for other parts of the SAP Business Suite running on this so-called loading system 32.

The loader 36 is adapted to access the test case repository 26 by means of a second communication path 30, again employing a straightforward file interface to provide any required test case data to the loader 36. In contrast to the web service architecture underlying the first communication path 20, the second path 30 further makes use of SAP's .Net Connector, a development environment that enables communication between the Microsoft. NET platform and SAP Business Suite.

On the other hand, the first loader 36 connects to a BS-specific second loader 46 running on an identical fourth execution environment 44, both hosted on an envisaged target system 42. As is common practice with SAP applications, the first and second loaders 36, 46 are linked through a third communication path 40 based on SAP's Remote Function Call protocol and further internal interfaces, allowing for a bidirectional exchange between both counterparts. The second, BS-specific loader 46 is locally supported by a client-specific third loader 48, allowing to populate the target database with diverse current and historical data and verify the result of test case execution.

Aside from the end-to-end connection via the first, second, and third communication paths 20, 30, 40, a fourth communication path 50 is established between the test case repository 26 and a suitable application lifecycle manager 56, for instance, the respective computer software application offered by Hewlett-Packard, or SAP's proprietary Solution Manager product. To this end, a separate ALM system 52 is dedicated to the task of overseeing the entire process of application delivery. In the embodiment discussed, the fourth communication path 50 is based on an architectural style known in the art as Representational state transfer (REST), allowing for a rigorous separation of the concerns of the test case repository 26 and application lifecycle manager 56.

In addition to a test automation workbench according to the invention, the extended Computer Aided Test Tool (eCATT) delivered by SAP may be employed as well due to its deep integration with SAP Business Suite. For certain low-level test cases, use of eCATT may allow for a scripted execution of Business Application Programming Interfaces (BAPIs) via Advanced Business Application Programming (ABAP). For other, especially application-spanning or inter-system test cases, use of the test automation workbench will be preferred for its instant usability, high level of automation, and reliable logging.

### Reference signs list

10: test automation system
12: client
14: first execution environment
16: test case editor
20: first communication path
22: repository
24: second execution environment
26: test case repository
30: second communication path
32: loading system
34: third execution environment
36: first loader
40: third communication path
42: target system
44: fourth execution environment
46: second loader
48: third loader
50: fifth communication path
52: ALM system
56: application lifecycle manager

## Claims

1. A method of automating a software test, comprising the steps of:
editing a test case by means of a test case editor (16);
storing the test case in a test case repository (26);
loading test data by means of a test data loader (36, 46, 48);
determining a test result of the test case based on the test data; and
providing a test log to a subscriber based on the test result,
**characterized in** the further step of, prior to loading the test data,
generating the test data based on a temporal precondition of the test case.

2. The method as recited in Claim 1, wherein the step of determining the test result is repeated based on a test cycle.

3. The method as recited in Claim 1 or Claim 2, wherein the step of loading the test data is controlled by the test case repository (26).

4. The method as recited in any of the preceding claims, wherein the test data comprises master data and transaction data.

5. The method as recited in any of the preceding claims, further comprising the step of, prior to loading the test data, generating the test data by means of a preconfigured template.

6. The method as recited in any of the preceding claims, further comprising the step of, prior to loading the test data, extracting the test data from a preconfigured system database.

7. The method as recited in any of the preceding claims, further comprising the step of, prior to loading the test data, migrating the test data from a legacy data source.

8. The method as recited in any of the preceding claims, wherein the step of providing the test log comprises aggregating a plurality of test results.

9. The method as recited in Claim 8, wherein the test log is provided by means of an electronic mail.

10. The method as recited in Claim 9, wherein the electronic mail is addressed to an electronic mail address associated with the test case.

11. The method as recited in Claim 9 or Claim 10, further comprising the step of detailing the test results on request by the subscriber.

12. The method as recited in any of the preceding claims, further comprising the step of, in response to the test result indicating a failure of the test case, reporting a defect based on the test case.

13. The method as recited in any of the preceding claims, wherein the test case comprises a plurality of versions and wherein the test result is associated with one of the versions.

14. A system (10) for automating a software test, comprising:
means for editing a test case using a test case editor (16);
means for storing the test case in a test case repository (26);
means for loading test data by means of a test data loader (36);
means for determining a test result of the test case based on the test data; and
means for providing a test log to a subscriber based on the test result,
**characterized in**
means for generating the test data based on a temporal precondition of the test case.

15. A computer software product (16, 26, 36, 46, 48) that includes a medium readable by a processor, the medium having stored thereon a set of instructions for automating a software test, comprising:
a first sequence of instruction which, when executed by the processor, causes said processor to modify a test case by means of a test case editor (16);
a second sequence of instruction which, when executed by the processor,
causes said processor to store the test case in a test case repository (26);
a fourth sequence of instruction which, when executed by the processor,
causes said processor to load test data by means of a test data loader (36, 46, 48);
a fifth sequence of instruction which, when executed by the processor, causes said processor to determine a test result of the test case based on the test data; and
a sixth sequence of instruction which, when executed by the processor, causes said processor to provide a test log to a subscriber based on the test result,
**characterized in**
a third sequence of instructions which, when executed by the processor,
causes said processor to generate the test data based on a temporal precondition of the test case.
